# EUROPEAN PATENT SPECIFICATION

(11) **EP 4 397 716 B1**
(45) Date of publication and mention of the grant of the patent: **03.09.2025**
(21) Application number: 22863996.9
(22) Date of filing: 15.06.2022
(51) Int. Cl.: C08L 77/06, C08G 69/26, C08K 5/3492, D01F 6/60, D01F 6/84, C08J 5/18, D01F 1/10

(54) **RESIN COMPOSITION AND MOLDED ARTICLE**
HARZZUSAMMENSETZUNG UND FORMGEGENSTAND
COMPOSITION DE RÉSINE ET ARTICLE MOULÉ

(30) Priority: 03.09.2021 JP 2021143680
(43) Date of publication of application: 10.07.2024
(73) Proprietor: MITSUBISHI GAS CHEMICAL COMPANY, INC., Chiyoda-ku Tokyo 100-8324 (JP)
(72) Inventor: YAMANAKA, Masaki, Hiratsuka-shi, Kanagawa 254-0016 (JP); ODA, Takafumi, Hiratsuka-shi, Kanagawa 254-0016 (JP)
(74) Representative: Vossius & Partner Patentanwälte Rechtsanwälte mbB
(86) International application number: PCT/JP2022/023901
(87) International publication number: WO 2023/032408

(56) References cited:
- WO-A1-2004/000921
- WO-A1-2017/010390
- WO-A1-2020/159085
- JP-A- 2000 300 131
- JP-A- 2003 192 798
- JP-A- 2015 196 835
- JP-A- 2018 087 319
- JP-A- 2019 089 905
- JP-A- 2020 200 405

## Description

### Technical Field

The present invention relates to a resin composition and a molded article.

### Background Art

Polyamide resins are known as resins that exhibit excellent molding processability, mechanical properties, and chemical resistance. Therefore, polyamide resins are widely used as materials in various components for automobiles, electrical and electronic products, daily necessities, and household goods, and as industrial materials, and manufacturing materials, for example. In recent years in particular, the environments in which polyamide resins are used have become more thermally and mechanically intense. Therefore, a demand exists for a polyamide resin material that exhibits a minimal decrease in mechanical strength even when used outdoors.

For example, Patent Document 1 discloses a polyamide composition containing an aliphatic polyamide (A), a semi-aromatic polyamide (B) including a diamine unit and a dicarboxylic unit, a flame retardant (C1), a flame retardant aid (C2), a white pigment (D), and an ultraviolet absorber (E), wherein the tanδ peak temperature of the polyamide composition is 90°C or higher, and a mass ratio (E)/(D) of the ultraviolet absorber (E) to the white pigment (D) contained in the polyamide composition is from 0.15 to less than 2.50. Patent Document 1 also indicates that the resin composition can form a molded article having good weld strength and Rockwell hardness when water is absorbed, as well as good surface appearance and weather discoloration resistance.

### Citation List

### Patent Documents

Patent Document 1: JP 2019-089905 A
JP 2018 087319 A concerns compositions comprising a polyamide based on xylylenediamine. The compositions present a good impact resistance and good barrier properties.

### Summary of Invention

### Technical Problem

However, it has been found that the color tone of a molded article formed from the resin composition described in Patent Document 1 significantly degrades (increases in the yellowness index (YI) value) when irradiated with ultraviolet light for a long period of time.

On the other hand, while a polyamide resin synthesized from xylylenediamine and an aliphatic dicarboxylic acid excels in various physical properties, such a resin exhibits a large decrease in strength when exposed to ultraviolet light. That is, the decrease in strength from the initial state is significant when the polyamide is irradiated with ultraviolet light for a long period of time.

Thus, an object of the present invention is to solve such issues by providing a resin composition that can be used to obtain a molded article in which an increase in the YI value is suppressed and a high level of strength can be maintained even when irradiated with ultraviolet light for a long period of time, and by also providing a molded article formed from the resin composition.

### Solution to Problem

The inventors of the present invention conducted an examination on the basis of the issues described above, and as a result, discovered that the issues described above can be solved by blending a predetermined amount of a predetermined triazine-based ultraviolet absorber into a xylylenediamine-based polyamide resin, and thereby the inventors arrived at the present invention.

Specifically, the issues described above are solved by the following aspects.
<1> A resin composition containing a polyamide resin and a triazine-based ultraviolet absorber, in which the polyamide resin contains a xylylenediamine-based polyamide resin containing a diamine-derived structural unit and a dicarboxylic acid-derived structural unit, 70 mol% or more of the diamine-derived structural units being derived from a xylylenediamine, 70 mol% or more of the dicarboxylic acid-derived structural units being derived from an α,ω-linear aliphatic dicarboxylic acid having from 6 to 14 carbons, and in which, when in a state of a 10 mg/L chloroform solution, the triazine-based ultraviolet absorber has an absorbance at a wavelength of 290 nm of 0.50 or more, and a content of the triazine-based ultraviolet absorber is 0.5 mass% or more in relation to a total mass of the resin composition.
<2> The resin composition according to <1>, in which the α,ω-linear aliphatic dicarboxylic acid having from 6 to 14 carbons includes an α,ω-linear aliphatic dicarboxylic acid having from 8 to 14 carbons.
<3> The resin composition according to <1>, in which the α,ω-linear aliphatic dicarboxylic acid having from 6 to 14 carbons includes sebacic acid and/or dodecanedioic acid.
<4> The resin composition according to <1>, in which the α,ω-linear aliphatic dicarboxylic acid having from 6 to 14 carbons includes dodecanedioic acid.
<5> The resin composition according to any one of <1> to <4>, in which the triazine-based ultraviolet absorber includes an ultraviolet absorber represented by Formula (1): 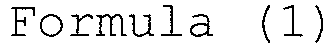 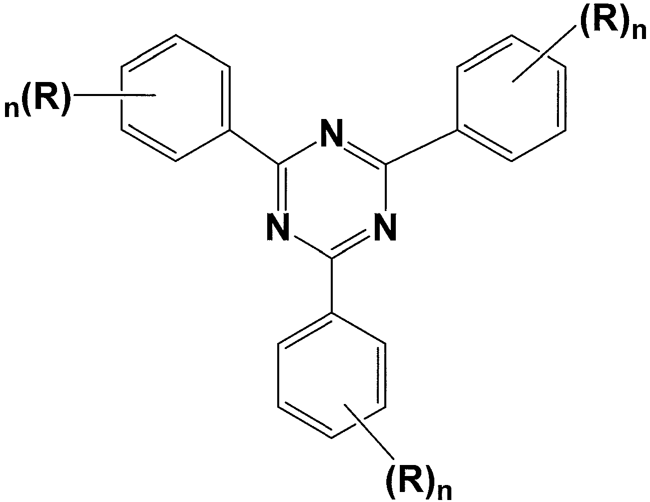 where in Formula (1), R is each independently an alkyl group having from 1 to 10 carbons, an alkoxy group having from 1 to 15 carbons, or a hydroxyl group, and n is each independently an integer from 0 to 4.
<6> The resin composition according to any one of <1> to <5>, in which the content of the xylylenediamine-based polyamide resin is 90.0 mass% or more in relation to the total mass of the polyamide resin.
<7> The resin composition according to any one of <1> to <6>, which is for extrusion molding.
<8> A molded article including the resin composition described in any one of <1> to <7>.
<9> The molded article according to <8>, in which the molded article is an extrusion molded article.
<10> The molded article according to <8>, in which the molded article is a film.
<11> The molded article according to <8>, in which the molded article is a fiber.

### Advantageous Effects of Invention

According to the present invention, a resin composition that can provide a molded article in which an increase in a yellowness index (YI) value is suppressed and a high level of strength can be maintained, even when irradiated with ultraviolet light for a long period of time, can be provided, and a molded article formed from the resin composition can also be provided.

### Description of Embodiments

Hereinafter, embodiments for conducting the present invention (referred to simply as "the present embodiments" below) will be described in detail. Note that the following embodiments are examples for describing the present invention, and the present invention is not limited to these embodiments.

In the present specification, "from ... to ..." or "of ... to ..." is used to mean that the numerical values described before and after "to" are included as the lower limit and the upper limit, respectively.

In the present specification, various physical property values and characteristic values are values at 23°C unless otherwise noted.

When a measurement method or the like of a standard set forth in the present specification differs depending on the year, it is based on the standard as of January 1, 2021, unless otherwise stated.

A resin composition of the present embodiments contains a polyamide resin and a triazine-based ultraviolet absorber, and is characterized in that the polyamide resin contains a xylylenediamine-based polyamide resin containing diamine-derived structural units and dicarboxylic acid-derived structural units with 70 mol% or more of the diamine-derived structural units being derived from a xylylenediamine, and 70 mol% or more of the dicarboxylic acid-derived structural units being derived from an α,ω-linear aliphatic dicarboxylic acid having from 6 to 14 carbons, and that, when in a state of a 10 mg/L chloroform solution, the triazine-based ultraviolet absorber has an absorbance at a wavelength of 290 nm of 0.50 or more, and the content of the triazine-based ultraviolet absorber is 0.5 mass% or more in relation to the total mass of the resin composition.

Through such a constitution, a resin composition can be obtained that is capable of providing a molded article in which an increase in the YI value is suppressed and the strength can be maintained at a high level, even when irradiated with ultraviolet light for a long period of time.

In the present specification, the triazine-based ultraviolet absorber having an absorbance at a wavelength of 290 nm of 0.50 or more when in a state of a 10 mg/L chloroform solution may be referred to as a "specific triazine-based ultraviolet absorber".

Polyamide resins, and particularly xylylenediamine-based polyamide resins, tend to decrease in strength when irradiated with light having a wavelength from 280 to 300 nm. It is presumed that this decrease in strength occurs because the main chain of the polyamide resin, and particularly the carbon-carbon chain adjacent to the amide bond, is easily cleaved when irradiated with light in this wavelength range. In the present embodiments, it is presumed that cleavage of the main chain of the polyamide resin is suppressed by using an ultraviolet absorber having high absorptivity of light of a wavelength of 290 nm.

In particular, when the main chain of the polyamide resin is cleaved by irradiation with ultraviolet light, a crosslinking reaction proceeds, and as a result, the polyamide resin becomes brittle, and the strength decreases. In particular, when the cleavage of the main chain of the polyamide resin occurs, and the crosslinking reaction advances, the value of the weight average molecular weight Mw increases, but the value of the number average molecular weight Mn changes only slightly. That is, ΔMw/Mn becomes large. In the present embodiments, it is presumed that a high strength retention rate is achieved by suppressing an increase in the ΔMw/Mn even when irradiation with ultraviolet light is carried out for a long period of time.

In addition, a resin composition that exhibits excellent heat resistance during processing, and particularly when extrusion molded, can be obtained by using a triazine-based ultraviolet absorber.

### Polyamide Resin

The resin composition of the present embodiments contains a polyamide resin. The polyamide resin used in the present embodiments may be a crystalline polyamide resin or an amorphous polyamide resin, but is preferably a crystalline polyamide resin. A crystalline polyamide resin is a resin having a melting point measured by a differential scanning calorimeter (DSC).

The polyamide resin contains a xylylenediamine-based polyamide resin that includes diamine-derived structural units and dicarboxylic acid-derived structural units with 70 mol% or more of the diamine-derived structural units being derived from a xylylenediamine, and 70 mol% or more of the dicarboxylic acid-derived structural units being derived from an α,ω-linear aliphatic dicarboxylic acid having from 6 to 14 carbons. A molded article excelling in various physical properties can be obtained by including a xylylenediamine-based polyamide resin.

Of the diamine-derived structural units of the xylylenediamine-based polyamide resin, preferably 80 mol% or more, more preferably 85 mol% or more, even more preferably 90 mol% or more, and yet even more preferably 95 mol% or more are derived from a xylylenediamine. Of the diamine-derived structural units of the xylylenediamine-based polyamide resin, 100 mol% or less may be derived from a xylylenediamine.

The xylylenediamine preferably includes from 0 to 100 mol% of m-xylylenediamine and from 100 to 0 mol% of p-xylylenediamine, more preferably includes from 10 to 100 mol% of m-xylylenediamine and from 90 to 0 mol% of p-xylylenediamine, even more preferably includes from 20 to 100 mol% of m-xylylenediamine and from 80 to 0 mol% of p-xylylenediamine, and yet even more preferably includes from 50 to 90 mol% of m-xylylenediamine and from 50 to 10 mol% of p-xylylenediamine. Furthermore, the total amount of m-xylylenediamine and p-xylylenediamine is preferably 90 mol% or more, and does not exceed 100 mol%.

Of the dicarboxylic acid-derived structural units of the xylylenediamine-based polyamide resin, preferably 80 mol% or more, more preferably 85 mol% or more, even more preferably 90 mol% or more, and still more preferably 95 mol% or more are derived from an α,ω-linear aliphatic dicarboxylic acid having from 6 to 14 carbons. Of the dicarboxylic acid-derived structural units of the xylylenediamine-based polyamide resin, 100 mol% or less may be derived from an α,ω-linear aliphatic dicarboxylic acid having from 6 to 14 carbons. The α,ω-linear aliphatic dicarboxylic acid having from 6 to 14 carbons preferably includes an α,ω-linear aliphatic dicarboxylic acid having from 8 to 14 carbons. By using an α,ω-linear aliphatic dicarboxylic acid having 8 or more carbons, the number of amide bonds in the resin is relatively reduced, and the frequency of cleavage of the main chain of the polyamide resin due to ultraviolet irradiation can be further reduced.

As the α,ω-linear aliphatic dicarboxylic acid having from 6 to 14 carbons, an acid such as adipic acid, sebacic acid, suberic acid, dodecanedioic acid, or eicodionic acid can be suitably used. Adipic acid, sebacic acid, and dodecanedioic acid are more preferable, sebacic acid and/or dodecanedioic acid are even more preferable, and dodecanedioic acid is yet even more preferable.

Examples of diamines besides xylylenediamine that can be used as raw material diamine components of the xylylenediamine-based polyamide resin include aliphatic diamines such as tetramethylenediamine, pentamethylenediamine, 2-methylpentanediamine, hexamethylenediamine, heptamethylenediamine, octamethylenediamine, nonamethylenediamine, decamethylenediamine, dodecamethylenediamine, 2,2,4-trimethyl-hexamethylenediamine, and 2,4,4-trimethylhexamethylenediamine; alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-aminocyclohexyl) propane, bis(aminomethyl)decalin, and bis(aminomethyl)tricyclodecane; and diamines having aromatic ring(s), such as bis(4-aminophenyl)ether, p-phenylenediamine, and bis(aminomethyl)naphthalene. One type thereof can be used, or two or more types thereof can be mixed and used.

Examples of dicarboxylic acid components other than the α,ω-linear aliphatic dicarboxylic acid having from 6 to 14 carbons include phthalic acid compounds, such as isophthalic acid, terephthalic acid, and ortho-phthalic acid; and isomers of naphthalenedicarboxylic acids, such as 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, and 2,7-naphthalenedicarboxylic acid. One type can be used alone, or two or more types can be mixed and used.

The xylylenediamine-based polyamide resin used in the present embodiments is constituted by, as main components, a structural unit derived from a diamine and a structural unit derived from a dicarboxylic acid, but structural units other than these are not entirely excluded, and of course, the polyamide resin may contain a structural unit derived from a lactam such as ε-caprolactam or laurolactam, or from an aliphatic aminocarboxylic acid such as aminocaproic acid and aminoundecanoic acid. Here, the term "main component" indicates that, of the structural units constituting the xylylenediamine-based polyamide resin, the total number of the diamine-derived structural units and the dicarboxylic acid-derived structural units is the largest among all the structural units. In the present embodiments, the total of the diamine-derived structural units and dicarboxylic acid-derived structural units in the xylylenediamine-based polyamide resin preferably accounts for 90 mass% or more and more preferably 95 mass% or more of the total structural units, and even more preferably accounts for 98 mass% or more of the total structural units other than terminal groups.

The polyamide resin contained in the resin composition of the present embodiments may be entirely (100 mass%) formed from the xylylenediamine-based polyamide resin or may contain another polyamide resin.

Examples of other polyamide resins include semi-aromatic polyamide resins such as terephthalic acid-based polyamide resins (polyamide 6T, polyamide 9T, polyamide 10T, polyamide 6T/6I), and aliphatic polyamide resins such as polyamide 6, polyamide 11, polyamide 12, polyamide 46, polyamide 66, polyamide 610, polyamide 612, polyamide 6/66, and polyamide 1010.

Note that, for example, polyamide 6 is a ring-opening polymer of caprolactam, but may contain a structural unit derived from another monomer within a range not departing from the gist of the present invention (for example, 5 mass% or less, further 3 mass% or less, and particularly 1 mass% or less of the total). The same applies to other polyamide resins such as polyamide 66.

In the present embodiments, the content of the xylylenediamine-based polyamide resin is preferably 90.0 mass% or more, more preferably 93.0 mass% or more, and still more preferably 97.0 mass% or more per the total mass of the polyamide resin contained in the resin composition.

The resin composition of the present embodiments may contain two or more types of xylylenediamine-based polyamide resins, and when two or more types are contained, the total amount is preferably within the above range.

The weight average molecular weight (Mw) of the polyamide resin (preferably a xylylenediamine-based polyamide resin) used in the present embodiments is preferably 8000 or more, more preferably 10000 or more, even more preferably 20000 or more, yet even more preferably 30000 or more, and still even more preferably 35000 or more. The weight average molecular weight (Mw) of the polyamide resin used in the present embodiments is preferably 100000 or less, more preferably 96000 or less, and still more preferably 94000 or less, and may be 60000 or less.

The number average molecular weight (Mn) of the polyamide resin used in the present embodiments is preferably 6000 or more, more preferably 8000 or more, still more preferably 10000 or more, and yet even more preferably 19000 or more. Furthermore, the number average molecular weight (Mn) of the polyamide resin (preferably a xylylenediamine-based polyamide resin) used in the present embodiments is preferably 50000 or less, more preferably 48000 or less, even more preferably 46000 or less, and yet even more preferably 40000 or less.

A ratio of Mw/Mn of the polyamide resin used in the present embodiments is preferably 3.50 or less, more preferably 3.00 or less, even more preferably 2.50 or less, yet even more preferably 2.30 or less, and still even more preferably 2.20 or less. By setting the Mw/Mn to the abovementioned upper limit value or less, fluidity and melt viscosity stability during melting increase, and melt-kneading and melt molding processability become favorable. Furthermore, the molecular chains are uniformly oriented when the resin is processed into a film or fibers, and therefore toughness becomes favorable, and physical properties such as water absorption resistance, chemical resistance, and thermal aging resistance also tend to become favorable. Although there is no particular lower limit of the Mw/Mn ratio, 1.5 is a level close to the limit in methods used in general production processes, including a method of polymerization by dehydration polycondensation of an aqueous solution of a nylon salt or a method of polymerization by dropwise addition of a diamine into a molten dicarboxylic acid.

When the resin composition of the present embodiments contains two or more types of polyamide resins, the mixture is preferably within the range described above.

The resin composition of the resin composition of the present embodiments may contain a polyamide resin in addition to the xylylenediamine-based polyamide resin.

The content of the polyamide resin in the resin composition of the present embodiments is preferably 85 mass% or more, more preferably 90 mass% or more, even more preferably 93 mass% or more, still more preferably 96 mass% or more, and still even more preferably 98 mass% or more, of the resin composition. The upper limit of the content of the polyamide resin is based on a case in which the total of the polyamide resin and the specific triazine-based ultraviolet absorber accounts for 100 mass% of the resin composition.

The resin composition of the present embodiments may contain only one type of polyamide resin or may contain two or more types thereof. When two or more types are contained, the total amount thereof is preferably in the above range.

### <Specific triazine-based ultraviolet absorber>

The resin composition of the present embodiments contains, in relation to the total mass of the resin composition, 0.5 mass% or more of a triazine-based ultraviolet absorber (specific triazine-based ultraviolet absorber) having an absorbance at a wavelength of 290 nm of 0.50 or more when in a state of a 10 mg/L chloroform solution. Through the adoption of such a constitution, the mechanical strength of the obtained molded article can be maintained even after a light resistance test. Furthermore, a lower YI value can be maintained by using an ultraviolet absorber represented by the below-described Formula (1).

In a state of a 10 mg/L chloroform solution, the specific triazine-based ultraviolet absorber has an absorbance at a wavelength of 290 nm of 0.50 or more, preferably 0.60 or more, more preferably 0.65 or more, and even more preferably 0.70 or more. When the absorbance is equal to or more than the lower limit value described above, ultraviolet light that affects cleavage of the main chain of the polyamide resin can be efficiently absorbed, and the effect of suppressing a decrease in the molecular weight and a decrease in strength due to the progression of the crosslinking reaction tends to be further improved. Moreover, while there is no particular upper limit to the absorbance, the absorbance of a commercially available ultraviolet absorber is usually 1.5 or less.

The specific triazine-based ultraviolet absorber preferably includes a triphenyltriazine structure, and is more preferably a compound represented by Formula (1): 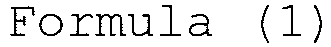 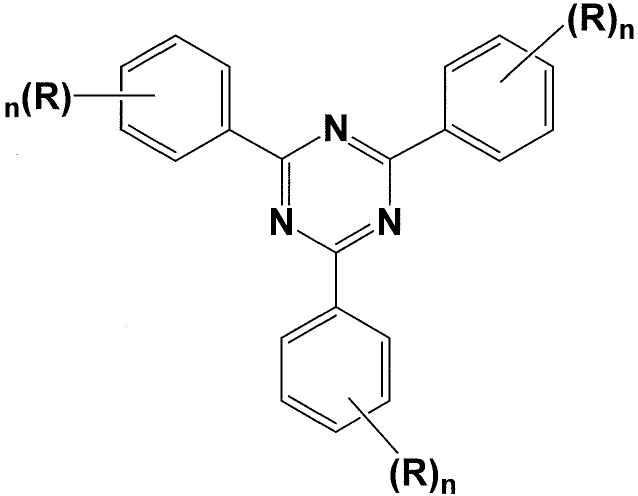 where in Formula (1), R is each independently an alkyl group having from 1 to 10 carbons, an alkoxy group having from 1 to 15 carbons, or a hydroxyl group, and n is each independently an integer from 0 to 4.

In Formula (1), preferably, R is each independently an alkyl group having from 1 to 5 carbons, an alkoxy group having 4 to 15 carbons, or a hydroxyl group. Preferably, n is each independently an integer from 0 to 3, and is more preferably an integer from 0 to 2.

The compound represented by Formula (1) preferably includes a compound represented by Formula (2): 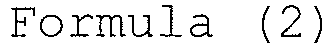 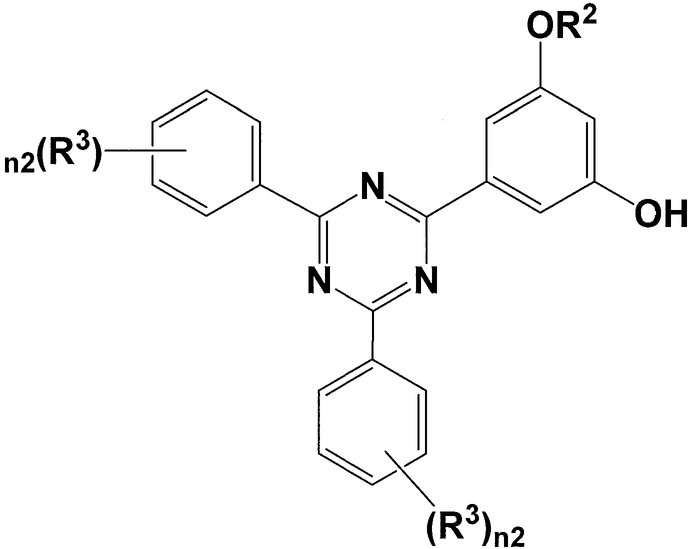 where in Formula (2), R² is an alkyl group having from 1 to 15 carbons, R³ is each independently an alkyl group having from 1 to 10 carbons, and n2 is each independently an integer having from 0 to 4 carbons.

In Formula (2), R² is preferably an alkyl group having from 4 to 15 carbons, and is more preferably an alkyl group having from 4 to 12 carbons. Preferably, R³ is each independently an alkyl group having from 1 to 5 carbons, is more preferably a methyl group or an ethyl group, and is even more preferably a methyl group. Preferably, n2 is each independently an integer from 0 to 3, and is more preferably an integer from 0 to 2.

The molecular weight of the specific triazine-based ultraviolet absorber is preferably 310 or more, and is also preferably 1000 or less, and more preferably 800 or less, and may be 700 or less.

The content of the specific triazine-based ultraviolet absorber in the resin composition of the present embodiments is 0.5 mass% or more, preferably 0.6 mass% or more, more preferably 0.8 mass% or more, even more preferably 1.0 mass% or more, yet even more preferably 1.4 mass% or more, and still even more preferably 1.7 mass% or more. When the content is equal to or more than the above lower limit, the impact of ultraviolet light on cleavage of the main chain of the polyamide resin can be significantly suppressed, and the decrease in molecular weight and the decrease in strength due to the progression of the crosslinking reaction can be more effectively suppressed. In addition, the content of the specific triazine-based ultraviolet absorber in the resin composition is preferably 5.0 mass% or less, more preferably 4.0 mass% or less, even more preferably 3.5 mass% or less, and still more preferably 3.0 mass% or less. When the content is equal to or less than the upper limit described above, an increase in haze due to aggregation of an incompletely dispersed ultraviolet absorber can be more effectively suppressed.

The resin composition of the present embodiments may contain a single type of specific triazine-based ultraviolet absorber, or may contain two or more types thereof. When two or more types are contained, the total amount thereof is preferably in the above range.

### <Other components>

The resin composition of the present embodiments may contain other components without departing from the scope of the present embodiments. Examples of such additives include thermoplastic resins besides the polyamide resin, fillers, UV absorbers other than the specific triazine-based UV absorbers, antioxidants, hydrolysis resistance improving agents, weather resistance stabilizers, matting agents, fluorescent whitening agents, drip prevention agents, antistatic agents, antifogging agents, antiblocking agents, fluidity improvers, plasticizers, dispersants, antibacterial agents, and flame retardants. Only one type of these components may be used alone, or two or more types of these components may be used in combination. For details of these, reference can be made to the descriptions in paragraphs [0130] to [0155] of JP 4894982 B, paragraph [0021] of JP 2010-281027 A, and paragraph [0036] of JP 2016-223037 A.

Examples of the thermoplastic resin besides the polyamide resin include polyolefin resins such as polyethylene and polypropylene; polyester resins such as polyethylene terephthalate and polybutylene terephthalate; polycarbonate resins; polyoxymethylene resins; polyether ketones, polyether sulfones, and thermoplastic polyether imides.

In the present embodiments, preferably, a thermoplastic resin besides the polyamide resin is substantially not contained. "Substantially not contained" means that among resin components included in the resin composition of the present embodiments, the proportion of a thermoplastic resin besides the polyamide resin is 5 mass% or less, and the proportion thereof is preferably 3 mass% or less, and may be 1 mass% or less.

Preferably, the resin composition of the present embodiments substantially does not contain an ultraviolet absorber other than the specific triazine-based ultraviolet absorber. "Substantially does not contain" means that among ultraviolet absorbers included in the resin composition of the present embodiments, the proportion of ultraviolet absorbers other than the specific triazine-based ultraviolet absorber is 5 mass% or less, and the proportion thereof is preferably 3 mass% or less, and may be 1 mass% or less.

Specific examples of the plasticizer include hexyldecyl p-hydroxybenzoate (available from Kao Corporation, Exceparl HD-PB), ethylhexyl p-hydroxybenzoate, ethylhexyl o-hydroxybenzoate, and N-butylbenzene sulfonamide. Moreover, reference can be made to the disclosure of paragraphs [0033] to [0038] of WO 2017/010389, the contents of which are incorporated herein by reference.

Note that in the resin composition of the present embodiments, the contents of the polyamide resin, the triazine-based ultraviolet absorber, and other additives are adjusted such that the total content of the components is 100 mass%. In the present embodiments, an aspect is exemplified in which the total of the polyamide resin and the triazine-based ultraviolet absorber accounts for 98 mass% or more of the resin composition.

### <Physical properties of resin composition>

With regard to the resin composition of the present embodiments, a change (ΔMw/Mn) in the ratio of Mw/Mn between before and after ultraviolet irradiation is preferably small.

Specifically, the change in the ratio of Mw/Mn (ΔMw/Mn) between before and after irradiation for 400 hours with ultraviolet light from a xenon lamp (in accordance with method A of JIS K 7350-2, irradiation intensity: 60 W/m²) is preferably 0.70 or less, more preferably 0.50 or less, still more preferably 0.40 or less, and yet even more preferably 0.35 or less. The lower limit of the ΔMw/Mn is ideally 0, but from a practical perspective is 0.01 or higher.

The ΔMw/Mn is measured as described in the Examples below.

The resin composition of the present embodiments preferably has a high strength retention rate between before and after ultraviolet irradiation.

Specifically, the tensile strength retention rate when irradiated for 400 hours with ultraviolet light using a xenon lamp (in accordance with method A of JIS K 7350-2, irradiation intensity: 60 W/m²) is preferably 40% or more, more preferably 60% or more, even more preferably 65% or more, yet even more preferably 70% or more, still even more preferably 73% or more, and further preferably 75% or more. The upper limit of the tensile strength retention rate is ideally 100%, but the performance requirements can be sufficiently satisfied even with a tensile strength retention rate of 90% or less.

The tensile strength retention rate is measured in accordance with a method described in the examples below.

Preferably, the resin composition of the present embodiments can suppress a change in color between before and after ultraviolet irradiation.

Specifically, the YI value after irradiation with ultraviolet light for 400 hours using a xenon lamp (in accordance with method A of JIS K 7350-2, irradiation intensity: 60 W/m²) is preferably 15 or less, more preferably 10 or less, even more preferably 7 or less, yet even more preferably 6 or less, and still even more preferably 5 or less. The lower limit of the YI value is ideally 0, but from a practical perspective, is 0.10 or higher.

The YI value after irradiation with ultraviolet light for 400 hours using a xenon lamp (in accordance with method A of JIS K 7350-2, irradiation intensity: 60 W/m²) is measured as described in the Examples below.

### <Resin composition production method>

The method for producing the resin composition according to the present embodiments is not particularly limited, but is preferably a method in which a single-screw or twin-screw extruder having equipment that can implement devolatilization from a vent port is used as a kneader. The polyamide resin, the triazine-based ultraviolet absorber, and other additives to be blended as necessary may be supplied to the kneader all at once, or the polyamide resin component may be supplied and then the other blending components may be sequentially supplied. Moreover, two or more types of components selected from the respective components may be mixed and kneaded in advance.

### <Molded article>

The above-described resin composition (for example, pellets) is molded into a molded article by various molding methods. That is, the molded article of the present embodiments is molded from the resin composition of the present embodiments. The shape of the molded article is not particularly limited, and can be selected, as appropriate, according to the application and purpose of the molded article. Examples of the shape include a film shape, a rod shape, cylindrical, annular, circular, elliptical, polygonal, odd-shaped, hollow, a frame shape, a box shape, a panel shape, and a button shape. Among these, the molded article is preferably a film shape, a frame shape, a panel shape, or a button shape, and the approximate thickness thereof is, for example, from 1 mm to 5 mm when the molded article is a frame shape or a panel shape.

The method for forming the molded article is not particularly limited, and well-known molding methods can be adopted. Examples thereof include an injection molding method, an injection-compression molding method, an extrusion molding method, a profile extrusion method, a transfer molding method, a hollow molding method, a gas-assisted hollow molding method, a blow molding method, an extrusion blow molding, an IMC (in-mold coating molding) molding method, a rotary molding method, a multi-layer molding method, a two-color molding method, an insert molding method, a sandwich molding method, a foaming molding method, and a pressure molding method. In particular, the resin composition of the present embodiments is suitable for a molded article obtained by an injection molding method, an injection-compression molding method, or an extrusion molding method, and is further suitable for a molded article (extrusion molded article) obtained by an extrusion molding method. However, the resin composition of the present embodiments is of course not limited to molded articles obtained by these methods.

One embodiment of a molded article formed from the resin composition of the present embodiments is a film. In particular, the molded article is preferably used as a stretched film. For details of the film, reference can be made to the descriptions in paragraphs [0036] to [0042] of JP 2020-200405 A.

Another embodiment of the molded article formed from the resin composition of the present embodiments is a fiber (filament). In particular, the molded article is preferably used as a drawn fiber. For details on the fiber (filament), reference can be made to the descriptions in paragraphs [0026] to [0031] of WO 2020/250564.

The resin composition and molded article of the present embodiments are suited for applications involving long-term exposure to ultraviolet light, and in particular, the resin composition and molded article of the present embodiments are widely used in applications including components for transportation devices, such as automobiles; general mechanical components; precision mechanical components; electronic and electrical equipment components; OA equipment components; building materials and housing-related components; medical devices; leisure sporting goods; amusement goods; and defense and aerospace products.

### Examples

The present invention will be described more specifically with reference to examples below.

If a measuring device used in the examples is not readily available due to discontinuation or the like, another device with equivalent performance can be used for measurement.

### Raw Materials

### <Polyamide resin>

PA-1: MP12 (polyamide composed of MXDA, PXDA and dodecanedioic acid, MXDA/PXDA = 70 mol%/30 mol%)
PA-2: MP10 (polyamide composed of MXDA, PXDA and sebacic acid, MXDA/PXDA = 70 mol%/30 mol%)
PA-3: MXD6 (polyamide composed of MXDA and adipic acid), available from Mitsubishi Gas Chemical Company, #6000

### <<Synthesis of MP12>>

A reaction vessel equipped with a stirrer, a partial condenser, a total condenser, a thermometer, a dropping funnel, a nitrogen introduction tube, and a strand die was charged with 11377 g (49.4 mol) of 1,12-dodecanedioic acid and 11.66 g of sodium acetate/sodium hypophosphite monohydrate (molar ratio = 1/1.5), and after sufficient nitrogen purging, the mixture was heated to 170°C and melted while the system was stirred under a small nitrogen stream.

Under stirring, 6647 g of a mixed xylylenediamine (34.16 mol of m-xylylenediamine and 14.64 mol of p-xylylenediamine, available from Mitsubishi Gas Chemical Co., Inc.) in which the molar ratio of m-xylylenediamine and p-xylylenediamine was 70/30 was added dropwise to the molten product in the reaction vessel, and the internal temperature was continuously increased to 235°C over a period of 2.5 hours while condensation water that was generated was discharged outside of the system. After dropwise addition was completed, the internal temperature was increased, and when the temperature reached 240°C, the pressure inside the reaction vessel was reduced. The internal temperature was then further increased, and a melt polycondensation reaction was continued for 10 minutes at 250°C. Subsequently, the inside of the system was pressurized with nitrogen, and the obtained polymer was discharged from the strand die and pelletized to produce a polyamide resin.

### <<MP10 synthesis example>>

A reaction vessel equipped with a stirrer, a partial condenser, a total condenser, a thermometer, a dropping funnel, a nitrogen introduction tube, and a strand die was charged with 9991 g (49.4 mol) of sebacic acid and 11.66 g of sodium acetate/sodium hypophosphite monohydrate (molar ratio = 1/1.5), and after sufficient nitrogen purging, the mixture was heated to 170°C and melted while the system was stirred under a small nitrogen stream.

Under stirring, 6647 g of a mixed xylylenediamine (34.16 mol of m-xylylenediamine, 14.64 mol of p-xylylenediamine, available from Mitsubishi Gas Chemical Co., Inc.) in which the molar ratio of m-xylylenediamine and p-xylylenediamine was 70/30 was added dropwise to the molten product in the reaction vessel, and the internal temperature was continuously increased to 235°C over a period of 2.5 hours while condensation water that was generated was discharged outside of the system. After dropwise addition was completed, the internal temperature was increased, and when the temperature reached 240°C, the pressure inside the reaction vessel was reduced. The internal temperature was then further increased, and a melt polycondensation reaction was continued for 10 minutes at 250°C. Subsequently, the inside of the system was pressurized with nitrogen, and the obtained polymer was discharged from the strand die and pelletized to produce a polyamide resin.

### <Number average molecular weight (Mn) and weight average molecular weight (Mw)>

The number average molecular weight (Mn) and the weight average molecular weight (Mw) of the polyamide resin and the resin composition were measured through gel permeation chromatography (GPC).

Specifically, the Mn and Mw were measured using the "HLC-8320GPC" device available from Tosoh Corporation, two "TSK gel Super HM-H" columns available from Tosoh Corporation, and as an eluent, hexafluoroisopropanol (HFIP) having a sodium trifluoroacetate concentration of 10 mmol/L, under conditions including a resin concentration of 0.02 mass%, a column temperature of 40°C, and a flow rate of 0.3 mL/min, and the Mn and Mw values were determined as values in terms of polymethyl methacrylate standard. Furthermore, a calibration curve was created by measuring six levels of PMMA dissolved in HFIP.

### <Ultraviolet absorber>

UVA-1: KEMISORB 102, available from Chemipro Kasei Kaisha, Ltd.

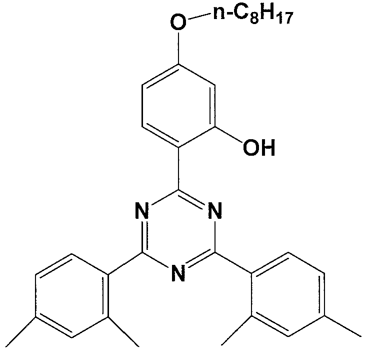

UVA-2: TINUVIN 1577ED, available from BASF SE

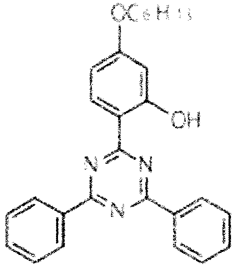

UVA-3: ADK STAB LA-31, available from Adeka Corporation

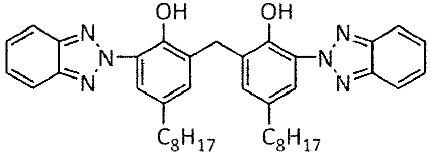

UVA-4: ADK STAB LA-F70, available from Adeka Corporation

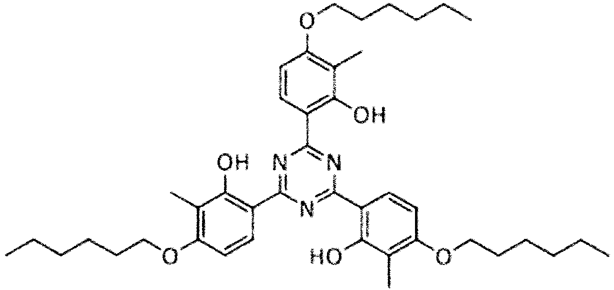

### <Measurement of absorbance by ultraviolet absorber at wavelength of 290 nm>

The absorbance of light at a wavelength of 290 nm was measured as follows with the ultraviolet absorber being in a state of a 10 mg/L chloroform solution.

The ultraviolet absorber was weighed to obtain an amount of 10.0 mg, and then added to a 100 mL volumetric flask. Chloroform (available from Kanto Chemical Co., Inc.) was added thereto to obtain a constant volume. Subsequently, 1.0 mL of the solution was weighed and added to a 10 mL volumetric flask, after which chloroform was added to obtain a constant volume, and thereby a 10 mg/L chloroform solution was prepared.

The prepared 10 mg/L chloroform solution was then used to measure absorbance using an ultraviolet-visible-near infrared spectrophotometer (UV 3600 Plus, available from Shimadzu Corporation). The range of measured wavelengths was from 250 to 600 nm.

### Examples 1 to 5 and Comparative Examples 1 to 4

### <Production of film>

In order to obtain the respective compositions described in Table 1 below, the polyamide resin and the ultraviolet absorber were each weighed and dry-blended such that the amount of the ultraviolet absorber in the resin composition was the amount shown in Table 1, after which the materials were inserted from the base of the screws of a twin-screw extruder equipped with a T-die (PTM-30, available from the PLABOR Research Laboratory of Plastics Technology Co., Ltd.) and melt-kneaded, and thereby a film having a width of 200 mm and a thickness of 180 µm was obtained. The temperature of the extruder was set to 280°C.

### <Production of stretched film>

The obtained film was cut into 135 mm squares. Subsequently, a batch-type biaxial stretching machine (tenter method; EX10-S5, available from Toyo Seiki Seisaku-sho, Ltd.) was used to stretch the film in both the machine direction (MD) and the transverse direction (TD) while heating in an air atmosphere at 70°C such that the stretching ratio was 4-times in the MD and 2.25-times in the TD, and the total stretching ratio was 9-times, and thereby a stretched film having a thickness of 20 µm was obtained. The stretching temperature was 70°C. After the stretching, heat fixation was performed. The heat fixation temperature was 180°C, and the heat fixation time was 30 seconds.

### <Light resistance test (measurement of molecular weight and YI)>

The number average molecular weight (Mn) and weight average molecular weight (Mw) of each obtained unstretched film were measured according to the above-described methods, and the value of Mw/Mn was calculated. In addition, the YI value was measured in accordance with the method described below.

Next, using a light resistance tester (trade name: SUNTEST XXL+, available from Atlas, a division of Ametak, Inc.), the film used for measuring the YI value was continuously irradiated with ultraviolet light for 400 hours with a xenon lamp (in accordance with method A of JIS K 7350-2, irradiation intensity: 60 W/m²). The test was conducted with the temperature in the test chamber set to 38°C and the relative humidity set to 50% RH. After the YI value of the irradiated film was measured, the number average molecular weight (Mn) and the weight average molecular weight (Mw) were measured according to the above-described methods, and the value of Mw/Mn was calculated. Furthermore, the difference in Mw/Mn values between before and after ultraviolet irradiation (ΔMw/Mn, Mw/Mn after irradiation minus Mw/Mn before irradiation) was calculated.

### <Yellowness Index (YI)>

The obtained unstretched film was cut into a 40 mm square, and then the YI value was measured using a color/turbidity measuring instrument (trade name: COH-400A, available from Nippon Denshoku Industries Co., Ltd.).

### <Solubility in HFIP>

The solubility of the resin composition in hexafluoro-2-propanol (HFIP) was evaluated as follows.

An amount of 5 mg of a sample (the obtained film) was weighed into a 13.5 cc vial, after which 5 g of HFIP was added thereto. The mixture was shaken every 30 minutes, and the state after 2 hours from the addition of HFIP was visually confirmed to determine the solubility.

The resin composition tended to become brittle as the crosslinking reaction progressed, and therefore the solubility in HFIP was determined as follows in accordance with the solubility of the sample at the time of the GPC measurements.
A: Dissolved without any issue (crosslinking was not observed).
B: Other than A and C, for example, partially undissolved matter was generated (crosslinking partially proceeded).
C: Partially dissolved, but a large amount of undissolved matter was present (crosslinking reaction proceeded in a large portion).

### <Light resistance test (tensile strength retention ratio)>

The tensile strength of the obtained stretched film was measured using a strip having a width of 10 mm at a test rate of 50 mm/min in accordance with JIS K 7127. At the time of measurement, tensile test of the stretch film in MD was performed, and the distance between chucks was set to 50 mm. The tensile rate was set to 50 mm/min. The measurement environment was in an atmosphere at 23°C and a relative humidity (RH) of 50%.

Next, the obtained stretched film was cut into a 100 mm square, and continuously irradiated with ultraviolet light for 400 hours under the same conditions as those for the unstretched film.

After irradiation, the stretched film was subjected to a tensile test in the same manner as before irradiation to measure the tensile strength, and the tensile strength retention rate was calculated by the following equation. Tensile strength retention rate (%) = (tensile strength (MPa) before ultraviolet light irradiation - tensile strength (MPa) before ultraviolet light irradiation)/(tensile strength (MPa) before ultraviolet light irradiation) x 100

**[Table 1]**

| | | | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|---|---|
| Raw material | Polyamide resin | Type | PA-1 | PA-1 | PA-1 | PA-2 | PA-3 | PA-1 | PA-1 | PA-1 | PA-1 |
| | | Mn | 23800 | 23800 | 17500 | 16300 | 32800 | 23800 | 17500 | 18300 | 18300 |
| | | Mw | 44200 | 44200 | 31400 | 31200 | 63200 | 44200 | 31400 | 31200 | 31200 |
| | Ultraviolet absorber | | UVA-1 | UVA-2 | UVA-1 | UVA-1 | UVA-1 | - | UVA-1 | UVA-3 | UVA-4 |
| | | Absorbance | 0.90 | 0.75 | 0.90 | 0.90 | 0.90 | 0.90 | 0.90 | 0.35 | 0.16 |
| | | Added amount | 2.0 mass% | 2.0 mass% | 0.5 mass% | 2.0 mass% | 2.0 mass% | - | 0.05 mass% | 0.5 mass% | 0.5 mass% |
| Evaluation of Resin Composition | Before UV light irradiation | Mn | 25500 | 22900 | 17300 | 16500 | 32700 | 23800 | 16800 | 18200 | 18100 |
| | | Mw | 46400 | 42800 | 31700 | 31800 | 63400 | 44200 | 30500 | 31900 | 31400 |
| | | Mw/Mn | 1.82 | 1.87 | 1.83 | 1.93 | 1.94 | 1.86 | 1.81 | 1.75 | 1.74 |
| | | YI | 1.64 | 2.11 | 1.38 | 1.50 | 0.12 | 1.03 | 1.28 | 0.99 | 2.26 |
| | After 400h of UV light irradiation | Mn | 19700 | 19600 | 31700 | 16200 | 32900 | 15900 | 17600 | 14000 | 13600 |
| | | Mw | 40400 | 39200 | 40900 | 33600 | 72000 | 57400 | 55000 | 43300 | 34700 |
| | | Mw/Mn | 2.05 | 2.00 | 2.14 | 2.07 | 2.19 | 3.62 | 3.12 | 3.11 | 2.56 |
| | | YI | 1.65 | 2.08 | 3.72 | 4.25 | 10.11 | 7.82 | 7.53 | 4.56 | 7.86 |
| | | ΔMw/Mn | 0.23 | 0.13 | 0.31 | 0.14 | 0.25 | 1.76 | 1.31 | 1.36 | 0.82 |
| | Solubility in HFIP | | A | A | A | A | A | C | C | B | B |
| | Tensile strength retention rate (%) | | 75% | 79% | 50% | 57% | 53% | Not measurable | Not measurable | 24% | 31% |

The molded articles formed from the resin compositions of the present invention exhibited a suppressed increase in YI and a high strength retention rate, even after being irradiated with ultraviolet light. Moreover, it was found that an increase in the ΔMw/Mn was suppressed, and that progression of the crosslinking reaction of the molded article can be suppressed during ultraviolet irradiation.

## Claims

1. A resin composition comprising a polyamide resin and a triazine-based ultraviolet absorber,
wherein the polyamide resin comprises a xylylenediamine-based polyamide resin comprising a diamine-derived structural unit and a dicarboxylic acid-derived structural unit, 70 mol% or more of the diamine-derived structural unit being derived from a xylylenediamine, and 70 mol% or more of the dicarboxylic acid-derived structural unit being derived from an α,ω-linear aliphatic dicarboxylic acid having from 6 to 14 carbons, and
wherein, when in a state of a 10 mg/L chloroform solution, the triazine-based ultraviolet absorber has an absorbance at a wavelength of 290 nm of 0.50 or more, and
a content of the triazine-based ultraviolet absorber is 0.5 mass% or more in relation to a total mass of the resin composition.

2. The resin composition according to claim 1, wherein the α,ω-linear aliphatic dicarboxylic acid having from 6 to 14 carbons comprises an α,ω-linear aliphatic dicarboxylic acid having from 8 to 14 carbons.

3. The resin composition according to claim 1, wherein the α,ω-linear aliphatic dicarboxylic acid having from 6 to 14 carbons comprises sebacic acid and/or dodecanedioic acid.

4. The resin composition according to claim 1, wherein the α,ω-linear aliphatic dicarboxylic acid having from 6 to 14 carbons comprises dodecanedioic acid.

5. The resin composition according to any one of claims 1 to 4, wherein the triazine-based ultraviolet absorber comprises an ultraviolet absorber represented by Formula (1): 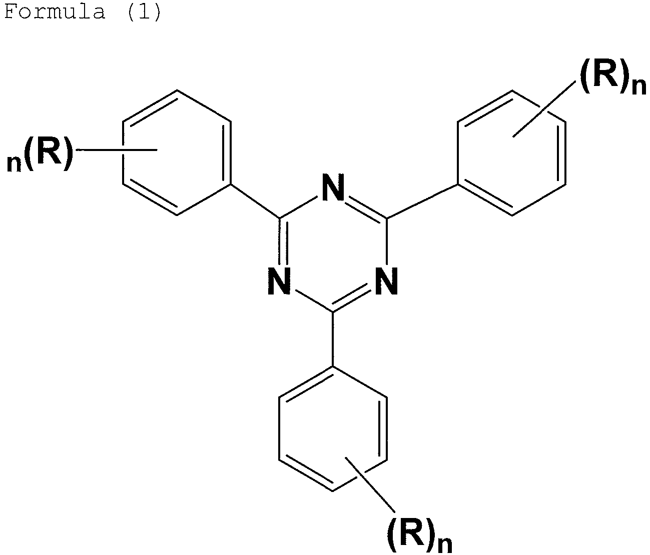 where in Formula (1), R is each independently an alkyl group having from 1 to 10 carbons, an alkoxy group having from 1 to 15 carbons, or a hydroxyl group, and n is each independently an integer from 0 to 4.

6. The resin composition according to any one of claims 1 to 5, wherein a content of the xylylenediamine-based polyamide resin is 90.0 mass% or more in relation to a total mass of the polyamide resin.

7. The resin composition according to any one of claims 1 to 6, which is for extrusion molding.

8. A molded article comprising a resin composition described in any one of claims 1 to 7.

9. The molded article according to claim 8, wherein the molded article is an extrusion molded article.

10. The molded article according to claim 8, wherein the molded article is a film.

11. The molded article according to claim 8, wherein the molded article is a fiber.

## Patentansprüche

1. Eine Harzzusammensetzung, umfassend ein Polyamidharz und einen Ultraviolettabsorber auf Triazinbasis,
wobei das Polyamidharz ein Polyamidharz auf Xylylendiaminbasis umfasst, das eine von Diamin abgeleitete Struktureinheit und eine von Dicarbonsäure abgeleitete Struktureinheit umfasst, wobei 70 Mol-% oder mehr der von Diamin abgeleiteten Struktureinheit von einem Xylylendiamin abgeleitet sind, und 70 Mol-% oder mehr der von Dicarbonsäure abgeleiteten Struktureinheit von einer α,ω-linearen aliphatischen Dicarbonsäure mit 6 bis 14 Kohlenstoffatomen abgeleitet sind, und
wobei, wenn im Zustand einer 10 mg/L Chloroformlösung, der Ultraviolettabsorber auf Triazinbasis eine Absorption bei einer Wellenlänge von 290 nm von 0,50 oder mehr aufweist, und
ein Gehalt des Ultraviolettabsorbers auf Triazinbasis 0,5 Massen-% oder mehr beträgt, bezogen auf die Gesamtmasse der Harzzusammensetzung.

2. Die Harzzusammensetzung nach Anspruch 1, wobei die α,ω-lineare aliphatische Dicarbonsäure mit 6 bis 14 Kohlenstoffatomen eine α,ω-lineare aliphatische Dicarbonsäure mit 8 bis 14 Kohlenstoffatomen umfasst.

3. Die Harzzusammensetzung nach Anspruch 1, wobei die α,ω-lineare aliphatische Dicarbonsäure mit 6 bis 14 Kohlenstoffatomen Sebacinsäure und/oder Dodecandisäure umfasst.

4. Die Harzzusammensetzung nach Anspruch 1, wobei die α,ω-lineare aliphatische Dicarbonsäure mit 6 bis 14 Kohlenstoffatomen Dodecandisäure umfasst.

5. Die Harzzusammensetzung nach einem der Ansprüche 1 bis 4, wobei der Ultraviolettabsorber auf Triazinbasis einen Ultraviolettabsorber umfasst, dargestellt durch Formel (1): 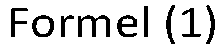 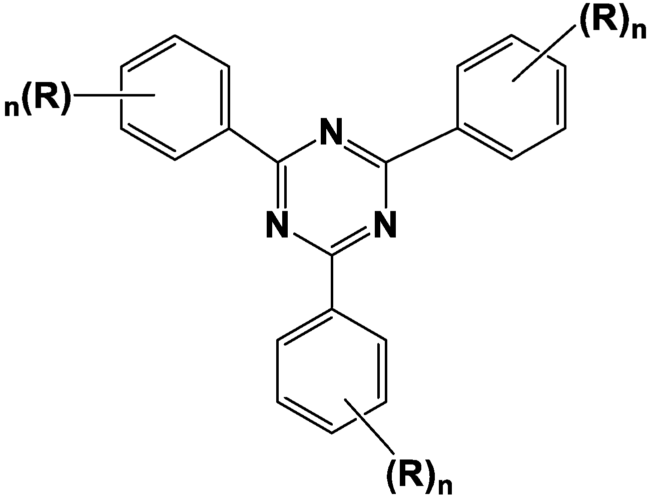 wobei in Formel (1) R jeweils unabhängig eine Alkylgruppe mit 1 bis 10 Kohlenstoffatomen, eine Alkoxygruppe mit 1 bis 15 Kohlenstoffatomen oder eine Hydroxylgruppe ist, und n jeweils unabhängig eine ganze Zahl von 0 bis 4 ist.

6. Die Harzzusammensetzung nach einem der Ansprüche 1 bis 5, wobei ein Gehalt des Polyamidharzes auf Xylylendiaminbasis 90,0 Massen-% oder mehr, bezogen auf die Gesamtmasse des Polyamidharzes, beträgt.

7. Die Harzzusammensetzung nach einem der Ansprüche 1 bis 6, die zum Extrusionsformen bestimmt ist.

8. Ein Formgegenstand, umfassend eine Harzzusammensetzung, wie in einem der Ansprüche 1 bis 7 beschrieben.

9. Der Formgegenstand nach Anspruch 8, wobei der Formgegenstand ein extrusionsgeformter Gegenstand ist.

10. Der Formgegenstand nach Anspruch 8, wobei der Formgegenstand eine Folie ist.

11. Der Formgegenstand nach Anspruch 8, wobei der Formgegenstand eine Faser ist.

## Revendications

1. Composition de résine comprenant une résine de polyamide et un absorbeur ultraviolet à base de triazine,
dans laquelle la résine de polyamide comprend une résine de polyamide à base de xylylènediamine comprenant un motif structurel dérivé de diamine et un motif structurel dérivé d'acide dicarboxylique, 70 % en moles ou plus du motif structurel dérivé de diamine dérivant d'une xylylènediamine, et 70 % en moles ou plus du motif structurel dérivé d'acide dicarboxylique dérivant d'un acide α,ω-dicarboxylique aliphatique linéaire ayant de 6 à 14 atomes de carbone, et
dans laquelle, quand il est dans un état de solution à 10 mg/l dans le chloroforme, l'absorbeur ultraviolet à base de triazine a une absorbance à une longueur d'onde de 290 nm de 0,50 ou plus, et
une teneur en l'absorbeur ultraviolet à base de triazine est de 0,5 % en masse ou plus par rapport à la masse totale de la composition de résine.

2. Composition de résine selon la revendication 1, dans laquelle l'acide α,ω-dicarboxylique aliphatique linéaire ayant de 6 à 14 atomes de carbone comprend un acide α,ω-dicarboxylique aliphatique linéaire ayant de 8 à 14 atomes de carbone.

3. Composition de résine selon la revendication 1, dans laquelle l'acide α,ω-dicarboxylique aliphatique linéaire ayant de 6 à 14 atomes de carbone comprend l'acide sébacique et/ou l'acide dodécanedioïque.

4. Composition de résine selon la revendication 1, dans laquelle l'acide α,ω-dicarboxylique aliphatique linéaire ayant de 6 à 14 atomes de carbone comprend l'acide dodécanedioïque.

5. Composition de résine selon l'une quelconque des revendications 1 à 4, dans laquelle l'absorbeur ultraviolet à base de triazine comprend un absorbeur ultraviolet représenté par la formule (1) : 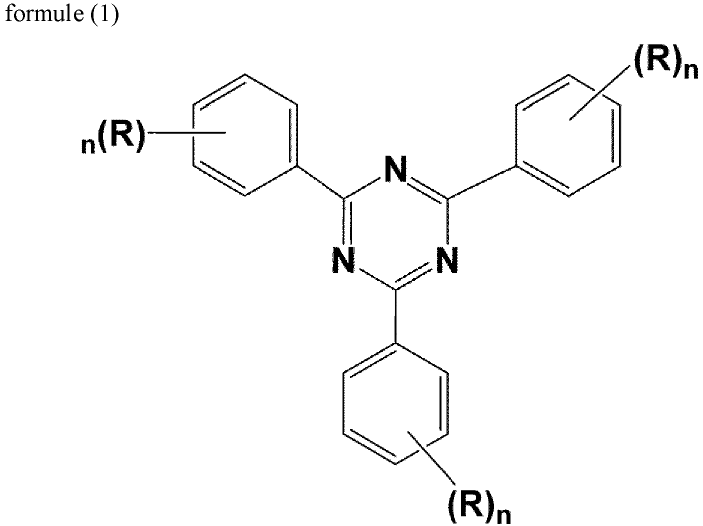 où, dans la formule (1), chaque R est indépendamment un groupe alkyle ayant de 1 à 10 atomes de carbone, un groupe alcoxy ayant de 1 à 15 atomes de carbone, ou un groupe hydroxyle, et chaque n est indépendamment un entier de 0 à 4.

6. Composition de résine selon l'une quelconque des revendications 1 à 5, dans laquelle une teneur en la résine de polyamide à base de xylylènediamine est de 90 % en masse ou plus par rapport à la masse totale de la résine de polyamide.

7. Composition de résine selon l'une quelconque des revendications 1 à 6, qui est destinée à un moulage par extrusion.

8. Article moulé comprenant une composition de résine décrite dans l'une quelconque des revendications 1 à 7.

9. Article moulé selon la revendication 8, lequel article moulé est un article moulé par extrusion.

10. Article moulé selon la revendication 8, lequel article moulé est un film.

11. Article moulé selon la revendication 8, lequel article moulé est une fibre.
